Europäisches Patentamt

European Patent Office

Office européen des brevets

(11) Veröffentlichungsnummer: **0 325 916**
**A1**

(12) **EUROPÄISCHE PATENTANMELDUNG**

(21) Anmeldenummer: 89100126.5

(22) Anmeldetag: 05.01.89

(51) Int. Cl.⁴: **A23G 1/00 , A23L 1/305**

(30) Priorität: 08.01.88 DE 3800323

(43) Veröffentlichungstag der Anmeldung:
02.08.89 Patentblatt 89/31

(84) Benannte Vertragsstaaten:
AT BE CH DE ES FR GB GR IT LI LU NL SE

(71) Anmelder: Jacobs Suchard AG
Seefeldquai 17
CH-8008 Zürich(CH)

(72) Erfinder: Zumbé, Albert
28, Rue des Battieux
CH-2003 Neuchâtel(CH)

(74) Vertreter: Bolte, Erich, Dipl.-Ing. et al
c/o Meissner, Bolte & Partner Patentanwälte
Hollerallee 73
D-2800 Bremen 1(DE)

(54) Konsumenten-freundliche Schokolade.

(57) Die Erfindung betrifft eine Schokolade mit gutem Nährwert, die Konsumenten, die allergisch auf Protein in Kakao oder Milch und/oder empfindlich auf Theobromin oder Coffein sind und/oder auf bioaktive Amine, die in normaler Schokolade vorlegen, reagieren, verbesserte Verträglichkeit bietet. Die erfindungsgemäße Schokolade enthält keinen Kakao-Liquor, kein Kakaopulver und kein Milchpulver. Ihre Proteinquelle ist Proteinhydrolysat und/oder 1-Aminosäuren, wobei diese so ausgewählt sind, daß ein gutes Aroma erreicht wird, und die essentiellen Qualitäten des Proteins erhalten bleiben.

EP 0 325 916 A1

EP 0 325 916 A1

## Konsumenten-freundliche Schokolade

Die Erfindung betrifft Konsumenten-freundliche Schokolade.

In den letzten Jahren wurde eine Zunahme an allergischen Erkrankungen in allen Bevölkerungsgebieten beobachtet. Bei vielen Personen treten nach dem Genuß einzelner oder verschiedener Lebensmittel Beschwerden auf. So wurde festgestellt, daß auch Schokolade allergische Reaktionen hervorrufen kann. Die Symptome können schwache bis schwere allergische Hautausschläge sowie eine Allergie der Atemwege umfassen. Diese Wirkungen wurden Kakao-Proteinen zugeschrieben.

In verschiedenen Patentschriften, so beispielsweise in US-PS 2039884, Bresnick, und in US-PS 4078093, Girsh, werden Verfahren zur Behandlung von Kakaobohnen, Kakao-Liquor oder Kakaopulver vorgeschlagen, um die Wirkung dieser Proteine zu beseitigen. Es ist offensichtlich, daß Konsumenten-freundliche Schokolade keine aktiven Kakao-Proteine enthalten darf. Im günstigen Fall eliminieren derartige Behandlungen eine allergische Reaktion, die mit Kakao-Protein verknüpft ist, allerdings bleiben andere Substanzen in Kakaobohnen, Kakao-Liquor und Kakaopulver zurück, welche ebenfalls unerwünschte Wirkungen haben können.

Theobromin und Koffein, chemisch als Methylxanthine bezeichnet, sind Stimulanzien und sind in Kakaobohnen, Kakao-Liquor und Kakaopulver enthalten. Solche Methylxanthine werden von einer wachsenden Zahl Konsumenten gemieden, wie sich beispielsweise in der wachsenden Popularität von entkoffeiniertem Kaffee zeigt. Eine Konsumenten-freundliche Schokolade sollte frei von solchen Methylxanthinen sein. Außerdem enthält Kakao, ebenso wie andere Nahrungsmittel wie z.B. Käse, geringe Mengen an bioaktiven Aminen. Es wird angenommen, daß diese bioaktiven Amine bestimmte Arten von Migräne hervorrufen. Auch solche bioaktiven Amine sollten in Konsumenten-freundlicher Schokolade nicht enthalten sein.

Einige der beliebtesten Schokoladen-Sorten enthalten nicht nur Kakao-Liquor oder Kakaopulver, sondern auch Milchpulver. Das in Milchpulver enthaltene Milchprotein ist als allergene Substanz bekannt, während viele Personen auch auf Lactose, dem in Milch vorliegenden Zucker, empfindlich sind. Milchpulver ist demnach ein ungeeigneter Bestandteil für Konsumenten-freundliche Schokolade.

Um die Anforderungen an Konsumenten-freundliche Schokolade zu erfüllen, muß ganz offensichtlich die Zusammensetzung von normaler Schokolade beträchtlich geändert werden. Obwohl es im Prinzip möglich wäre, alle bekannten Verbindungen in Kakao-Liquor oder Kakaopulver, die empfindliche Personen reizen können, das sind Proteine, Methylxanthine und bioaktive Amine, zu entfernen oder zu denaturieren, so würde dies ein sehr komplexes Verfahren erfordern, bei dem die Gefahr bestünde, daß andere unerwünschte Chemikalien eingebracht würden. Bei der erfindungsgemäßen Konsumenten-freundlichen Schokolade werden diese Probleme durch den Ausschluß von Kakao-Liquor und Kakao-pulver überwunden. Lediglich aus Kakaobutter sind Kakao-Feststoffe enthalten.

Ein Schokoladenprodukt, welches Kakaobutter, aber keinen KakaoLiquor oder Kakaopulver enthält, ist als weiße Schokolade allgemein bekannt. Leider enthält weiße Schokolade Milchpulver und dadurch Milchprotein und Lactose. Bei Entfernung des gesamten Milchpulvers aus weißer Schokolade würde sich die Zusammensetzung auf Fette und Zucker reduzieren, was hinsichtlich des Nährwertes unerwünscht wäre. Bei Konsumenten-freundlicher Schokolade ist dieses Problem dadurch gelöst, daß Milchpulver entfernt wird und durch qualitativ hochwertiges Protein, Milchfett und entweder Maltose, Maltodextrin oder Lactose ersetzt wird. Das hochwertige Protein wird vorzugsweise durch Milchprotein-Hydrolysat, ergänzt mit 1-Aminosäuren oder der Einfachheit halber durch eine Mischung von 1-Aminosäuren geliefert. Diese Quellen für nicht-intaktes Protein wurden viele Jahre in hypoallergenen enteralen Rezepturen oder elementalen Rezepturen erfolgreich verwendet. Dazu wird auf US-PS 4670268, Mahmond, verwiesen.

Die Verwendung von Protein-Hydrolysaten und Aminosäure-Mischungen ist nicht ohne Schwierigkeiten, insbesondere wegen ihres unerwünschten sauren und charakteristischen Aromas und bitteren Nachgeschmacks. In letzter Zeit wurden Verbesserungen hinsichtlich des Aromas von Protein-Hydrolysaten erreicht und es werden "entbitterte" Typen von Hydrolysaten bevorzugt. Das Aroma von Aminosäuren ist prinzipiell nicht verbesserungsfähig.

Eine detaillierte Aroma-Bewertung einzelner Aminsoäuren und Aminsoäure-Mischungen führt hingegen zu einem überraschenden Ergebnis. Es zeigte sich nämlich, daß meistens das nachteilige Aroma durch nicht-essentielle Aminosäuren bewirkt wurde. Da diese nicht essentiell sind, war es möglich, die zu entfernen, die am stärksten hervortreten. Dies waren Glutaminsäure, Asparaginsäure, Arginin und Cystin. Cystin wird manchmal mit essentiellen Aminosäuren aufgelistet, aber nicht weil es tatsächlich essentiell ist, sondern weil es zum Teil Methionin ersetzen kann. Die Entfernung von Glutaminsäure, Asparaginsäure, Arginin und Cystin ergab eine wesentliche Verbesserung der Aroma-Qualität von Konsumten-freundlicher Schokolade, die das Aminosäuregemisch enthielt.

Um den Ernährungswert von Konsumenten-freundlicher Schokolade zu verbessern, wird eine Mischung von mineralischen Nahrungsstoffen zugegeben, die den Gehalt an Calcium, Phosphat, Magnesium, Zink, Eisen und Jod erhöhen. Die genaue Zusammensetzung der verwendeten Mineralstoffe ist von geringer Bedeutung, vorausgesetzt, sie haben eine gute biologische Verfügbarkeit und sie sind durch die entsprechende Gesetzgebung zugelassen. Typische geeignete Mineralstoffe sind Calciumcarbonat, Calciumphosphat, Magnesiumphosphat, Zinksulfat, elektrolytisches Eisen und Kaliumjodat. Die Zugabemenge beträgt erfindungsgemäß entweder ein Drittel des Tagesbedarfs an mineralischen Nahrungsstoffen pro 100g Schokolade oder entspricht dem Anteil am Tagesbedarf an Mineralstoffen, der dem Anteil an durch die Schokolade gelieferten Tagesenergiebedarf entspricht.

Zur Verbesserung des Nährwertes werden auch Vitamine zugesetzt. Die Gruppe der Vitamine, die zugegeben werden können, umfaßt Vitamin C, Vitamin B1, Vitamin B2, Vitamin B6. Vitamin B12, Vitamin A, β-Carotin, Vitamin E, Vitamin D, Niacin, Folsäure, Pantothensäure und Biotin. Die Zugabemengen stehen auch hier -wie bei der Zugabe von Mineralstoffen - in Beziehung zu der empfohlenen Tagesbedarf.

Zur Verbesserung der sensorischen Eigenschaften enthält Konsumenten-freundliche Schokolade normalerweise einen natürlichen, naturidentischen oder synthetischen nicht-allergenen Aromastoff und gegebenenfalls einen nicht-allergenen Farbstoff. Durch einen Gehalt an Lecithin wird eine verbesserte Beschaffenheit (Struktur) erreicht.

Das Herstellungsverfahren für Konsumenten-freundliche Schokolade entspricht dem zur Herstellung von normaler weißer Schokolade verwendeten in bezug auf normale Ingredenzien. Besondere Bedeutung kommt notwendigerweise dem Proteinhydrolysat, den Aminosäuren, der Vitamin-Mischung, der Mineralstoff-Ergänzung, dem Farb- und dem Armonastoff zu. Proteinhydrolysate und Aminosäuren neigen leichter zur Reaktion mit reduzierenden Zuckern, der Maillard-Reaktion, als intaktes Protein. Vitamine, Farb-und Aromastoffe ändern ihre Stabilität mit den Verfahrens-Behandlungen, während mineralische Nahrungsstoffe unerwünschte chemische Reaktionen fördern können. Um unerwünschte Veränderungen dieser speziellen Ingredenzien zu reduzieren, werden sie nach dem Conchieren der übrigen Ingredenzien bei Anwendung möglichst tiefer Mischtemperaturen zugegeben. Die Schokoladenmischung wird dann unverzüglich temperiert und geformt.

Nachstehend folgt eine detaillierte Beschreibung bevorzugter Ausführungsformen der Erfindung:

Eine bevorzugte Zusammensetzung hinsichtlich Menge und Art der Ingredenzien ist folgende:

1. Kakao-Liquor und Kakaopulver sind nicht enthalten.

2. Gehalt von 8 bis 12 Gew.-% an entweder

a) Proteinhydrolysat, vorzugsweise "entbittertes" Casein- oder Lactalbumin-Hydrolysat einer Partikelgröße von nicht größer als 100μ mit oder ohne 1-Aminosäure-Ergänzung, die die Aminosäure Glutaminsäure, Asparaginsäure, Arginin und Cystin nicht enthält. Das Muster an essentiellen Aminosäuren kommt dem von Vollmilch sehr nahe.

oder

b) einer Mischung an 1-Aminosäuren, die frei von Glutaminsäure, Asparaginsäure, Arginin und Cystin ist. Das Muster an essentiellen Aminosäuren kommt dem von Vollmilch sehr nahe. Bevorzugt sollten a) und b) mindestens das Äquivalent von 8 Gew.-% des Proteins pro 100 g Schokolade ausmachen.

3. 25 bis 30 Gew.-% Kakaobutter, vorzugsweise 26 bis 27 Gew.-% desodorierte Kakaobutter.

4. 40 bis 50 Gew.-% Zucker, vorzugsweise 43 bis 44 Gew.-% Rohrzucker.

5. 10 bis 14 Gew.-% an entweder Maltose, Lactose oder Maltodextrin, vorzugsweise 13 bis 14 Gew.-% an entweder Maltose oder Lactose.

6. 6,5 bis 9,5 Gew.-% Milchfett, vorzugsweise 7,5 bis 8,0 Gew.-%.

7. 0,3 bis 0,8 Gew.-% Lecithin, vorzugsweise ca. 0,5 Gew.-% Soja- oder Milchlecithin.

8. Ausgewählte Vitamine und Mineralstoffe in Mengen, wie beispielsweise einem festgelegten Prozentsatz des täglichen Tagesbedarfs der Bevölkerung. Die bevorzugten Vitamine und Mineralstoffe umfassen Vitamin A,.β-Carotin, Vitamin C, Vitamin B1, Vitamin B2, Vitamin B6, Vitamin B12, Vitamin D, Vitamin E, Niacin, Folsäure, Pantothensäure, Biotin, Calcium, phosphorus magnesium, Zink, Eisen und Jod. Vorzugsweise können die Mengen an Vitaminen und Mineralstoffen entweder ein Drittel des Tagesbedarfs in 100g Schokolade oder einen Anteil am Tagesbedarf, der dem Anteil am durch 100g Schokolade gelieferten Tagesenergiebedarf entspricht, ausmachen.

9. Nicht-allergene Aromastoffe und gegebenenfalls Farbstoffe in Mengen, die durch die Praxis des Herstellungsverfahrens bestimmt werden.

Die Herstellung Konsumenten-freundlicher Schokolade erfordert Änderungen des gebräuchlichen Herstellungsverfahrens für weiße Schokolade. Insbesondere sollen Proteinhydrolysat, Aminosäuren, Vitamine, Mineralstoffe, Farb- und Aromastoffe erst zugegeben werden, wenn die Conchier-Stufe mit allen anderen

3

Ingredenzien vollendet ist. Anschließend folgt das Vermengen bei möglichst niedriger Temperatur und so schnell wie möglich, um eine homogene Masse zu erhalten. Danach wird die Masse unverzüglich temperiert und zu Schokolade geformt.

Konsumenten-freundliche Schokolade wird vorwiegend in Form von Tafeln verbraucht. Sie kann aber auch in anderen Formen - wie normale Schokolade üblicherweise - verwendet werden. In solchen Fällen ist die Zugabe von Vitaminen, mineralischen Nahrungsstoffen, Aroma- und Farbstoff nicht zweckmäßig. Die erfindungsgemäße Schokolade kann auch in hypoallergenen Nahrungsmitteln und anti-allergenen Medikationen Verwendung finden.

In Tabelle I ist die Manipulation des Gehalts an 1-Aminosäuren zur Annäherung an das 1-Aminosäure-Muster von Vollmilch durch Verwendung von Proteinhydrolysat mit 1-Aminosäure-Ergänzung und auch durch Verwendung einer 1-Aminosäure-Mischung allein dargestellt. Das letztgenannte Beispiel zeigt, daß vermieden wird, in 1-Aminosäure-Gemischen Glutaminsäure, Asparaginsäure, Arginin und Cystin einzusetzen.

Die Erfindung wird nachfolgend unter Bezugnahme auf die in Tabelle II aufgeführte Zusammensetzung und Herstellungsverfahren detaillierter beschrieben, ohne sie auf diese Beispiele zu beschränken.

In Stufe I wird ein Teil der Kakaobutter mit Zucker und entweder Lactose oder Maltose 10 Min. in einem geeigneten Mixer, z.B. Cut-O-Mat vermengt. Die Masse muß eine spezielle Beschaffenheit (Struktur), weder zu zäh noch zu trocken, aufweisen, bevor sie dem Refining unterworfen wird, und diese wird reguliert durch Vergrößern oder Verkleinern der Menge an zugegebener Kakaobutter.

Tabelle I

| Zusammensetzung hypoallergener Proteinquellen im Vergleich mit Vollmilch-Protein. | | | | |
|---|---|---|---|---|
| Aminosäuren | Vollmilch-Protein | Gewicht in g an Aminosäure-Hydrolysat + Aminsosäure-Ergänzung | | Aminosäure-Mischung |
| essentiell | | | | |
| 1-Isoleucin | 0,402 | 0,397 | + 0,005 | 0,434 |
| -Leucin | 0,734 | 0,698 | + 0,036 | 0,761 |
| -Lysin | 0,586 | 0,594 | | 0,622 |
| -Methionin | 0,206 | 0,143 | + 0,063 | 0,278 |
| -Phenylalanin | 0,390 | 0,223 | + 0,167 | 0,392 |
| -Tyrosin | 0,322 | 0,202 | + 0,120 | 0,328 |
| -Threonin | 0,356 | 0,430 | | 0,354 |
| -Tryptophan | 0,103 | 0,092 | + 0,011 | 0,113 |
| -Valin | 0,528 | 0,397 | + 0,131 | 0,530 |
| nicht-essentiell | | | | |
| 1-Alanin | 0,275 | 0,475 | | 0,304 |
| -Arginin | 0,287 | 0,438 | | |
| -Asparaginsäure | 0,608 | 0,817 | | |
| -Cystin | 0,069 | 0,187 | | |
| -Glutaminsäure | 1,653 | 1,226 | | |
| -Glycin | 0,161 | 0,545 | | 1,474 |
| -Histidin | 0,218 | 0,119 | + 0,099 | 0,210 |
| -Prolin | 0,677 | 0,589 | | 0,637 |
| -Serin | 0,425 | 0,428 | | 1,563 |
| | 8,00 | 8,00 | + 0,632 | 8,00 |

Tabelle II

| Zusammensetzungen und Verfahrensablauf der Herstellung von Konsumentenfreundlicher Schokolade | | | |
|---|---|---|---|
| Verfahrensstufe | Ingredenzien | Gewicht in g pro 3 kg Material | |
| | | Beispiel I | Beispiel II |
| Stufe I Mischen | Kakaobutter | 577,7 | 565,3 |
| | Zucker | 1404,0 | 1373,8 |
| | Lactose | 427,0 | |
| | Maltose | | 417,8 |
| Stufe II Refining der Masse aus Verfahrensstufe I | | | |
| Stufe III Conchieren | Masse aus Stuffe II | | |
| | Kakaobutter | 288,9 | 282,7 |
| | Milchfett | 254,1 | 248,6 |
| | Lecithin | 16,8 | 16,4 |
| Stufe IV Mischen | Masse aus Stufe III | | |
| | Aminosäure-Mischung | 28,2 | |
| | Proteinhydrolysat | | 31,2 |
| | Aminosäure-Ergänzung | | 2,2 |
| | Aromastoff | 1,5 | 1,5 |
| | Farbstoff | 1,8 | |
| | Vitamin-Mischung | | 1,5 |
| | Mineralstoff-Mischung | | 59,0 |
| Stufe V Temperieren und Formen | | | |
| | | 3000,0 | 3000,0 |

In Stufe II wird die Masse aus Stufe I zu einem Drei-Walzen-Refiner, der bevorzugt mit Drucken von 11 bar an den Walzen und 5 bar am Messer arbeitet, gebracht. Es wird eine Reduzierung der Partikelgröße der Zucker auf nicht mehr als 20μm erreicht.

In Stufe III wird die Masse aus Stufe II in einen geheizten Conchen gegeben und 20 bis 30 Min. mit 40 Upm bei 50° C bewegt. Dadurch wird bewirkt, daß freie Feuchtigkeit entfernt wird, bevor andere Ingredenzien zugegeben werden. Milchfett, Lecithin und die restliche Kakaobutter werden zugegeben und die Mischung anschließend 17 h bei 56° C, 70 Upm conchiert.

In Stufe IV erfolgt die Zugabe der übrigen Ingredenzien einschließlich Proteinquellen, Farb- und Aromastoff, Vitamin- und Mineralstoffmischungen. Vorher muß allerdings die Partikelgröße des Proteinhydrolysats, der 1-Aminosäure-Mischung, der Vitamin-und Mineralstoffgemische reduziert werden. Bevorzugt ist eine Partikelgröße von nicht mehr als 100 μm, auf jeden Fall muß das Pulver ein Sieb der Maschenweite 1 mm gut passieren. Die Reduzierung der Korngröße kann durch Zermahlen in einer Achatmühle für 3 - 4 h durchgeführt werden.

Es hat sich gezeigt, daß zwei Arbeitsweisen zur Zugabe der Ingredenzien in Stufe IV zweckmäßig sind:

1. Das gemahlene Hydrolysat und/oder das Aminosäuregemisch wird langsam, über einen Zeitraum von 4 h, durch ein Sieb (1 mm Maschenweite) in die Masse aus Stufe III gebracht. Die übrigen Ingredenzien der Stufe IV werden anschließend zugefügt. Während der Zugabe wird die Masse kontinuierlich gerührt und bei einer Temperatur von 40° C gehalten.

2. Alternativ können die Ingredenzien der Stufe IV zu einer Teilmenge von 600g der Masse aus Stufe III gegeben werden. Die Zugabe erfolgt wie unter 1. durch ein Sieb (1 mm Maschenweite). Die Masse wird von Hand gerührt, um Homogenität zu erreichen, und anschließend wird die Masse zu eiem Drei-Walzen-Refiner, der vorzugsweise mit Drucken von 9 bar an den Walzen und 5 bar an der Klinge arbeitet, gebracht. Nach dem Refining wird die Masse für 30 Min. bei 50° C gehalten, manuell gerührt und zu der aus Stufe III übriggebliebenen Masse gegeben. Das Ganze wird 20 Min. bei 40° C gerührt.

Arbeitsweise 2 bietet gegenüber Arbeitsweise 1 einige Vorteile, wenn die Zugabe von Vitaminen und/oder Mineralstoffen und/oder Farbstoff erforderlich ist.

5

In Stufe V läßt man die Masse aus Stufe IV, erhalten entweder nach Arbeitsweise 1 oder Arbeitsweise 2, ein Sieb passieren, hält sie für 30 Min. auf 50-60°C und temperiert und formt sie anschließend mittels bekannter Verfahren.

Es ist möglich, Konsumenten-freundliche Schokolade erst nach Stufe V mit Ingredenzien wie z.B. Vitaminen, Mineralstoffen, Farb- und Aromastoffen anzureichern. Das erfindungsgemäße Endprodukt wird in diesem Fall erneut geschmolzen und die gewünschten Substanzen werden entweder in die gesamte Masse oder zunächst nur in einen Teil der Schokolade eingerührt. Anschließend wird die Schokolade wieder temperiert und geformt.

Während der Durchführung der oben beschriebenen Verfahrensschritte werden die Parameter Zeit und Temperatur genau überwacht. Denn insbesondere bei Anwendung relativ hoher Temperaturen über lange Zeiträume können unerwünschte Reaktionen ablaufen. Diese umfassen Maillard-Reaktionen, Verlust an Aroma, Veränderung der Farbe und Verlust an verfügbaren Aminosäuren und Vitaminen. Es ist notwendig, das Produkt in bezug auf derartige Verluste während des Verfahrens zu untersuchen und -wenn möglich - die Qualität des Produkts vor dem Temperieren und Formen der Schokolade wieder herzustellen.

Zur Veranschaulichung der Erfindung wurden spezielle Beispiele angegeben. Selbstverständlich sind für einen Fachmann Variationen innerhalb des beschriebenen Grundgedankens möglich.

## Ansprüche

1. Konsumenten-freundliche Schokolade,
dadurch gekennzeichnet, daß
- sie eine verbesserte Verträglichkeit für Konsumenten als Folge der Tatsache, daß sie hypoallergen und im wesentlichen frei von Methylxanthinen und bioaktiven Aminen ist, aufweist;
- sie keinen Kakao-Liquor oder Kakaopulver und keine intakten Proteine enthält;
- sie mindestens den gleichen Nährwert wie normale Schokolade hat.

2. Konsumenten-freundliche Schokolade im wesentlichen bestehend aus Zucker, Kakaobutter, Proteinhydrolysat und/oder 1-Aminosäuren, Maltose und/oder Lactose und/oder Maltodextrin, Milchfett und Lecithin.

3. Konsumenten-freundliche Schokolade nach Anspruch 1 oder 2, dadurch gekennzeichnet, daß ihr Gehalt an Proteinhydrolysat und/oder 1-Aminosäuren nicht über 12 Gew.-% und nicht unter 8 Gew.-%, bezogen auf die Masse, liegt.

4. Konsumenten-freundliche Schokolade nach einem oder mehreren der Ansprüche 1 bis 3, dadurch gekennzeichnet, daß Mischungen an 1-Aminosäuren solche Aminosäuren nicht enthalten, die ein unangenehmes Aroma haben, insbesondere Glutaminsäure, Asparaginsäure Arginin und Cystin.

5. Konsumenten-freundliche Schokolade nach den Ansprüchen 2 und 3, gekennzeichnet durch Proteinhydrolysate, die enzymatisch entweder aus Casein, Lactalbumin, Reisprotein, Sojaprotein oder Fleischprotein, vorzugsweise aber aus Casein oder Lactalbumin gewonnen wurden.

6. Konsumenten-freundliche Schokolade nach einem oder mehreren der Ansprüche 1 bis 5, dadurch gekennzeichnet, daß sie mit Vitaminen aus der Gruppe Vitamin A, β-Carotin, Vitamin C, Vitamin B1, Vitamin B2, Vitamin B6, Vitamin B12, Vitamin D, Vitamin E, Niacin, Folsäure, Pantothensäure und Biotin angereichert ist, derart, daß die Anreicherungsmenge in Relation zu der für den angesprochenen Konsumenten empfohlenen Tagesdosis steht.

7. Konsumenten-freundliche Schokolade nach einem oder mehreren der Ansprüche 1 bis 6, dadurch gekennzeichnet, daß sie mit mineralischen Nahrungsstoffen aus der Gruppe Calcium, Magnesium, Zink, Eisen, Phosphat und Jod angereichert ist, derart, daß die Anreicherungsmenge in Relation zu der für den angesprochenen Konsumenten empfohlenen Tagesdosis steht.

8. Konsumenten-freundliche Schokolade nach einem oder mehreren der Ansprüche 1 bis 7, dadurch gekennzeichnet, daß sie nicht-allergene Aromastoffe enthält.

9. Konsumenten-freundliche Schokolade nach einem oder mehreren der Ansprüche 1 bis 8, dadurch gekennzeichnet, daß sie nicht-allergene natürliche oder naturidentische färbende Agenzien, ZzB. β-Carotin enthält.

10. Verfahren zur Herstellung von Konsumenten-freundlicher Schokolade, insbesondere nach einem oder mehreren der Ansprüche 1 bis 9, gekennzeichnet durch Modifikationen des üblichen Verfahrens zur Herstellung von weißer Schokolade wie die Zugabe von Proteinhydrolysat und/oder 1-Aminosäuren, Vitaminen, mineralischen Nahrungsstoffen, Aromastoffen und Farbstoffen, während unerwünschte chemische Reaktionen, die zu Verlusten an Nahrungsstoffen und zu einer Verschlechterung der sensorischen Eigenschaften führen, auf ein Minimum reduziert werden.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,A | US-A-4 078 093  (L.S. GIRSH)<br>* Ansprüche 1-10 *<br>--- | 1 | A 23 G    1/00·<br>A 23 L    1/305 |
| A | WO-A-8 002 636  (SMC CORP.)<br>* Ansprüche 1-23 *<br>----- | 1 | |

RECHERCHIERTE SACHGEBIETE (Int. Cl.4)

A 23 G    1/00
A 23 L    1/00

Der vorliegende Recherchenbericht wurde für alle Patentansprüche erstellt

| Recherchenort | Abschlußdatum der Recherche | Prüfer |
|---|---|---|
| BERLIN | 05-04-1989 | SCHULTZE D |